# EUROPÄISCHE PATENTSCHRIFT

(11) **EP 3 589 376 B1**
(45) Veröffentlichungstag und Bekanntmachung des Hinweises auf die Patenterteilung: **07.04.2021**
(21) Anmeldenummer: 18708905.7
(22) Anmeldetag: 23.02.2018
(51) Int. Cl.: A63B 29/02, A63B 69/00

(54) **EXPRESSSCHLINGE FÜR SPORTKLETTERN MIT ERHEBUNGSSYSTEM UND ANZEIGE DER BENUTZUNGSFREQUENZ**
QUICKDRAW FOR SPORT CLIMBING WITH SURVEY SYSTEM AND DISPLAY OF USE FREQUENCY
DÉGAINE POUR ESCALADE SPORTIVE COMPORTANT UN SYSTÈME DE RELEVÉ ET UN AFFICHAGE DE LA FRÉQUENCE D'UTILISATION

(30) Priorität: 28.02.2017 IT 201700022331
(43) Veröffentlichungstag der Anmeldung: 08.01.2020
(73) Patentinhaber: Vertical-Life SRL, 39042 Bressanone (BZ) (IT)
(72) Erfinder: POLIG, Matthias, I-39040 Racines (BZ) (IT)
(74) Vertreter: Oberosler, Ludwig
(86) Internationale Anmeldenummer: PCT/EP2018/000074
(87) Internationale Veröffentlichungsnummer: WO 2018/157968

(56) Entgegenhaltungen:
- WO-A1-2014/195651
- CH-A5- 688 573
- US-A1- 2011 103 558
- US-A1- 2015 027 808

## Beschreibung

Die Erfindung bezieht sich auf eine Expressschleife für den Klettersport welche wesentlich aus zwei Karabiner besteht welche unter sich durch ein Verbindungselement aus textilem Werkstoff, z.B. aus synthetischen Fasern (Dyneema oder Nylon), verbunden sind und welche in ein Erhebungssystem, zwecks Anzeige der Benutzungsfrequenz integriert ist.

Die allgemein als "Expressschlinge" bezeichnete Verbindungsschlinge mit zwei Karabinern ist eine Sicherheitsvorrichtung welche es dem Sportler ermöglicht sein eigenes Seil an einem Sicherungspunkt einzuhängen wobei mehrere Sicherheitsvorteile geboten werden und das Klettern bequemer gestaltet wird. An den Sportkletterstrukturen welche künstlich Wände und Griffe nachbilden, welche mit mehreren Sicherungspunkten und mit einem am oberen Ende der Kletterroute vorgesehenem Zielbereich, auch "Kette" genannt ausgestattet sind, ist es bekannt die verschiedenen Sicherungspunkte und den Zielbereich, bzw. die "Kette", mit Expressschlingen auszustatten welche, nach einer bestimmten Benutzungszeit, aus Sicherheitsgründen ausgetauscht werden. Diese bekannten Expressschlingen sind mit einem Karabiner an den entsprechenden Sicherungspunkten und am Zielpunkt, bzw. an der "Kette", befestigt. Während dem Klettern hängt der Sportler progressiv sein Seil in den zweiten (freien) Karabiner der jeweiligen Expressschlinge ein. Die Verwendung der Expressschlinge an Stelle des einzelnen Karabiners bringt verschiedene Vorteile mit sich, wie den Verlauf des Seiles gemäß einer, der idealen Aufstiegslinie näheren, Linie (weniger ausgeprägte Zick-Zack-Linie), weniger gehemmter Durchlauf des Seiles, größerer Abstand zwischen Seil und Wand, optimale Nutzung der Seillänge (weniger Zick-Zack).

Die besagten Vorteile haben eine schnelle und kapillare Verbreitung der Expressschlingen für das Sportklettern an Kunstkletterwänden, an Kletterstrukturen und in Klettergärten bewirkt. Sei es beim Klettertraining als auch bei Kletterwettkämpfen ist es wichtig die Position der einzelnen verwendeten Expressschlingen und somit der Sicherungspunkte und deren sequentielle Anordnung, sowie die benötigten Zeiten um von einem Sicherungspunkt, bzw. von einer Expressschlinge, zur nächsten, bzw. zur "Kette" zu kommen, zu kennen. Um weiters die optimale Nutzung aller an einer Kletterstruktur vorgesehenen Kletterrouten zu erreichen ist es wichtig die Benutzungsfrequenz der einzelnen Routen zu kennen um eventuelle Gründe der vorgezogenen, bzw. der mangelhaften, Benutzung feststellen zu können und um eventuelle Änderungen vornehmen zu können um den Benutzungsgrad von wenig benutzten Routen erhöhen zu können. Die Erhebung der Benutzungsfrequenz der einzelnen Routen erfolgt aufgrund von Beobachtungen seitens des dafür bestimmten Personals und kann aufgrund von Befragung der Benützer durchgeführt werden. Die Erhebung der besagten Zeiten und der Sequenz der während des Kletterns benutzten Sicherungspunkte, ist schwierig und wenig genau, sie wird meist von einer Person "am Boden" durchgeführt und ist von deren Sehkapazität und der Reaktionsfähigkeit abhängig; es ist weiters schwierig jene einzelnen Bereiche der unterschiedlichen Routen zu erkennen wo sich häufig Abstürze ereignen; bzw. welche vom Benützer mit zu großer Leichtigkeit überwunden werden. Es ist die Erkennung der Benutzungsfrequenz der verschiedenen Routen und der besagten mehr oder weniger schwierigen Bereiche mittels Videokameras und Aufzeichnung der Videoaufnahmen bekannt. Die Anlage mit mehreren Videokameras ist jedoch teuer und die Auswertung der Aufzeichnungen ist sehr zeitaufwändig und subjektiv und insbesondere die Erkennung und Einschätzung der Bereiche welche eine Änderung der Route erfordern ist schwierig.

Aus der US 20150027808 A1 ist eine Sicherheitsvorrichtung für Personen bekannt welche aus einem "intelligenten" Sicherungsseil besteht welches, ausschließlich im Fall des Absturzes des an diesem Seil gesicherten Beschäftigten, automatisch ein Signal an das Rettungspersonal sendet. Diese Vorrichtung ist nicht geeignet um die einfache Benutzung des "intelligenten Sicherungsseiles" seitens eines Sportlers während der Klettertätigkeit zu signalisieren, ohne dass dieses durch dessen Sturz oder durch eine bestimmte Belastung aktiviert wird. Weiters ist das beschriebene Meldesystem an das Rettungspersonal nicht derart ausgelegt, um die Benutzung und das Durchklettern eines Sportlers von mehreren mit Expressschlingen versehenen Sicherungspunkten zu signalisieren und aufzuzeichnen, um dem Sportler selbst verschiedene Informationsdaten zu liefern aber auch, um die optimale Nutzung eines Klettergartens mit diversen Kletterrouten zu ermöglichen.

Aus der US 20011/0103558 A1 ist eine "Absturz"-Sicherheitsvorrichtung bekannt welche mit einem Belastungssensor ausgestattet ist welcher im Fall der Aktivierung ein Warnsignal an das Rettungspersonal sendet. Auch diese Vorrichtung wird nur im Fall von Stürzen aktiviert und ist nicht geeignet den Durchgang eines Sportlers unter Benutzung mehrerer mit erfindungsgemäßen Expressschlingen ausgestattete Sicherungspunkte zu signalisieren und zu speichern um dem Sportler selbst und für den Betrieb des Klettergartens nützliche Daten zu liefern.

Aus der CH 688 573 A5 ist eine Konstruktion zur Versteifung einer Expressschlinge bekannt welche es einem Kletterer erlaubt einen Zwischensicherungshaken außerhalb seiner natürlichen Reichweite einzuhängen. Die Konstruktion besteht aus einem Rohr, mit stirnseitigen Kerben für die Aufnahme eines Karabiners, wobei dieses etwas kürzer als die Schlinge ist welche sich axial durch das Rohr erstreckt. Durch Fingerdruck seitens des Kletterers auf eines der Rohrenden wird das Rohr entlang der Expressschlinge verschoben bis der Karabiner am freien Rohrende in die Kerben einrastet und so lange in stabiler Position fixiert bleibt, wie der Fingerdruck auf das dem Kletterer zugewandte Rohrende anhält. Der Kletterer kann anschließend mit dieser, durch das Rohr versteifte, Expressschlinge samt dem fixierten Karabiner einen Zwischensicherungshaken, außerhalb seiner natürlichen Reichweite, erreichen und den Karabiner einhängen. Nach Einhängen des Karabiners und Unterbrechung des Fingerdruckes auf das dem Kletterer zugewandte Rohrende, rutscht der Karabiner aus der Kerbe und wird wieder flexibel von der Expressschlinge gehalten. Diese Expressschlinge mit verschiebbarem Versteifungsrohr ist nicht mit einem Sensor ausgestattet und somit ist nicht geeignet, infolge einer minimalen Bewegung, bzw. Berührung, bei Benutzung seitens des Kletterers, ein elektronisches Signal auszusenden welches von einer, mit einem Smartphone und/oder einem Computer kommunizierenden, Basisstation empfangen wird, so dass das Signal bearbeitet, gespeichert und mit bereits vorher gespeicherten Signalen verglichen werden kann um die, sich daraus ergebenden, entsprechenden Werte am Display anzuzeigen, bzw. graphisch darzustellen.

Die Erfindung stellt sich die Aufgabe eine Expressschlinge mit Erhebungssystem und Anzeige der Benutzungsfrequenz der oben beschriebenen Art zu schaffen welche derart ausgestattet ist dass:
- die exakte Erhebung der Einhängzeiten an den verschiedenen Sicherungspunkten, bzw. der Zeiten zwischen den Einhängvorgängen an den einzelnen Sicherungspunkten einer Kletterroute,
- die Erhebung der Zeit zum Erreichen des Zielbereiches (der "Kette"),
- die Erhebung der Position der einzelnen benutzten Sicherheitspunkte, bzw. der benutzten Route,
- die Erhebung der schwierigen Bereiche und der "Schlüsselbereiche", bzw. der zu leicht überwindbaren Bereiche der Route,
- die Erhebung der Absturzfrequenz an jedem einzelnen Sicherheitspunkt,
- und die Erhebung der Benutzungsfrequenz der einzelnen Routen der Klettergartenstruktur,
ermöglicht wird.

Zur Lösung dieser Aufgabe schlägt die Erfindung vor am Verbindungselement meist aus textilem Werkstoff, der Expressschlinge, vorzugsweise austauschbar, mindestens einen Sensor samt Signalaufbereiter vorzusehen welcher in der Lage ist jegliche Richtungsänderung, bzw. Berührung, der Expressschleife seitens des Sportlers wahrzunehmen. Die besagten Signale können z.B. direkt von einem Smartphone, von einem Computer und/oder von einer spezifischen Empfängereinheit welche geeignet ist die besagten Daten, autonom oder infolge der Übermittlung an einen kommunizierenden Smartphone oder Computer, zu verarbeiten und/oder anzuzeigen und/oder zu speichern. Erfindungsgemäß kann der Sensor ein Beschleunigungssensor in verkleinerter Ausführung sein, wie er z.B. in Smatphones als Neigungssensor zwecks Drehung der Bildschirmanzeigen von vertikal auf horizontal und umgekehrt, verwendet wird. Der Sensor zeigt jede Positionsänderung durch ein elektronisches Signal an, welches von modernen Messsystemen aufgenommen wird; der Sensor kann eventuell mit unterschiedlichen Sensoren gekoppelt werden (z.B. InfrarotSensoren, Kreisel-Sensoren, Magnetometer-Sensoren, NFC(near fieldcomunication) -Sensoren. Um die Position und die progressive Benutzung derExpressschleifen einer Kletterroute erheben zu können ist das vom Sensor, bzw. von den Sensoren, mit Signalaufbereiter ausgesandte Signal der einzelnen Expressschleifen jeweils ein spezifisches "individuelles" Signal (z.B. mit spezifischer Frequenz) um dessen Erkennung und Zuordnung zur entsprechende Position entlang der Kletterroute zu ermöglichen und um das Signal zu den übrigen benutzten Expressschlingen in Bezug stellen zu können. Das Verbindungselement der erfindungsgemäßen Expressschlinge kann, in seinem Inneren, den Sensor zusammen mit dem entsprechenden Signalaufbereiter und einer Netzteilbatterie so aufnehmen, dass deren Entnahme, zwecks Austausch der Batterie, benutzerfreundlich ist, ohne dass eine äußere Anbringung mittels eigener Taschenausformung oder mittels einer Hülle oder eines Trägerteiles, z.B. in Form eines Klettverschlusses, ausgeschlossen wird. Diese letzte Anwendungsform bietet sich insbesondere für den Zielbereich an welcher meist durch die "Kette" definiert ist. Natürlich erfolgt die Anbringung des Sensors zusammen mit dem Signalaufbereiter und der Batterie so, dass die Funktionstüchtigkeit der Expressschlinge nicht beeinträchtigt wird. Vorteilhafterweise ist der Sensor zusammen mit dem Signalaufbereiter und der Batterie im Inneren einer Kunststoffhülle untergebracht welche als Schutzhülle wirkt und eine Form hat welche den Austausch der Batterie begünstigt.

Die Erfindung wird anschließend anhand eines in den beigelegten Zeichnungen schematisch dargestellten, vorzuziehenden Ausführungsbeispieles einer erfindungsgemäßen Expressschlinge näher erklärt, dabei erfüllen die Zeichnungen rein erklärenden, nicht begrenzenden, Zweck.

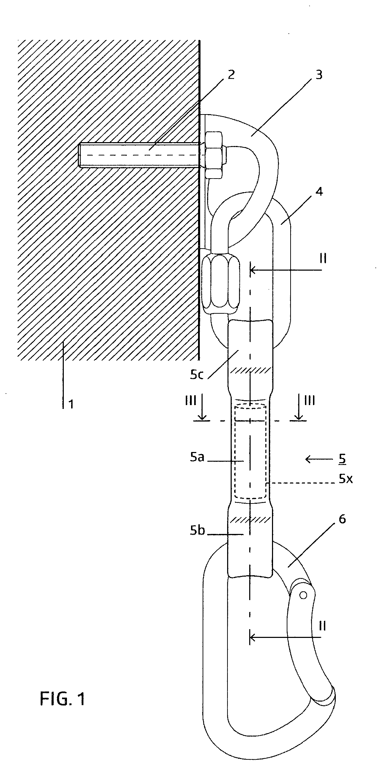

Die Fig. 1 zeigt die Seitenansicht einer erfindungsgemäßen, an einem Sicherheitspunkt einer Kletterwand eingehängten, Expressschlinge.

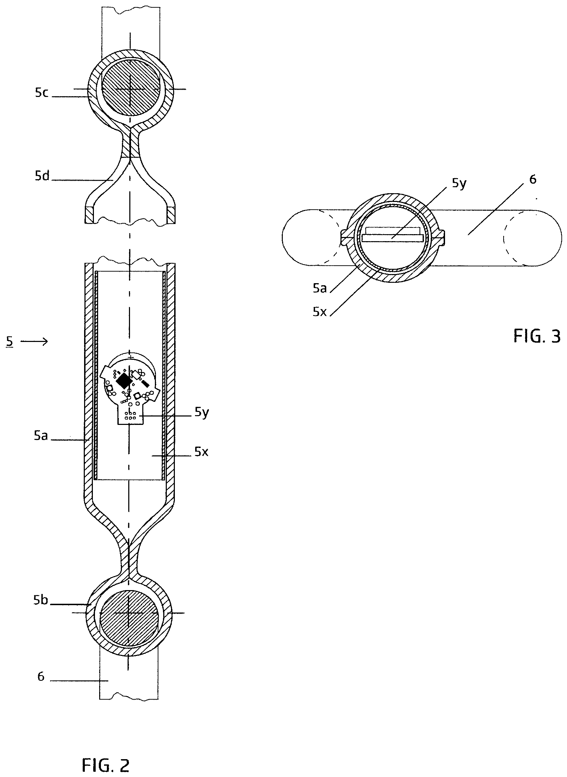

Die Fig. 2 zeigt den Längsschnitt durch das Verbindungselement der erfindungsgemäßen Expressschlinge, gemäß der in Fig. 1 gezeigten Schnittebene II-II.

Die Fig. 3 zeigt einen Querschnitt durch das Verbindungselement der erfindungsgemäßen Expressschlinge, gemäß der in Fig. 1 gezeigten Schnittebene III-III.

Die Fig. 4 zeigt die Seitenansicht einer erfindungsgemäßen Expressschlinge mit Sensor samt Signalaufbereiter und Batterie welche außen, seitlich an der Expressschlinge, mittels Klettverschluss-Träger befestigt sind.

Die Fig. 4a zeigt einen Längsschnitt durch die Expressschlinge, gemäß der in Fig. 4 gezeigten Schnittebene II-II, in vergrößertem Maßstab.

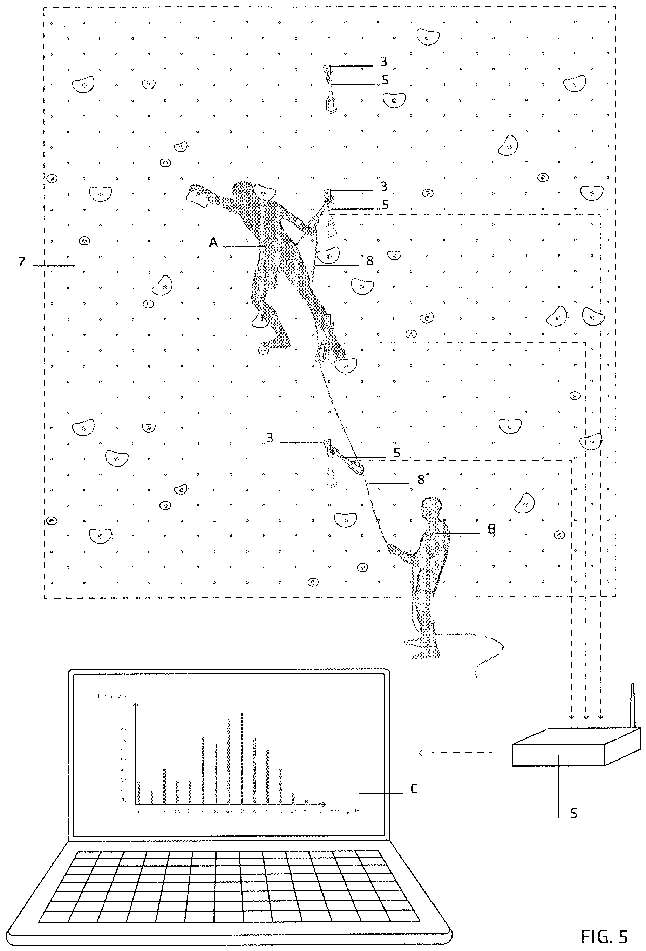

Die Fig. 5 zeigt einen Sportler an einer Kletterwand mit mehreren Sicherheitpunkten welche mit erfindungsgemäßen Expressschlingen versehen sind und mit einer Basisstation für den Empfang der, von den Sensoren der einzelnen erfindungsgemäßen durch den Sportler aktivierten Expressschlingen, ausgesandten Signale, samt einem PC für die Anzeige der über die besagte Basisstation gesandten Daten/Werte.

Die erfindungsgemäße Expressschlinge besteht in bekannter Weise aus:
- einem ersten Karabiner 4 eventuell mit spezifischer Ausführung zwecks bequemem Einhängen an einem, mittels Schraube 2 an der Kletterwand 1 befestigtem, Ring 3 eines Sicherheitspunktes,
- einem Verbindungselement 5 aus textilem Werkstoff,
- einem zweiten Karabiner 6 eventuell mit spezifische Ausführung, unterschiedlich im Vergleich zum Karabiner 4, zwecks bequemem Einhängen des Seiles 8.

Das erfindungsgemäße Verbindungselement 5 kann, wie jene der bekannten und auf breiter Ebene benutzten Expressschlingen, aus einem Band aus textilem Werkstoff gefertigt sein und besteht aus einem mittleren Längsteil 5a welcher einerseits in einer Schlinge 5b für den Karabiner 6 endet und am entgegengesetzten Ende in einer Schlinge 5c für den Karabiner 4 endet. Der mittlere Längsteil 5a ist vorzugsweise schlauchförmig und weist nahe der Schlinge 5c für den Einhäng-Karabiner 4 am Ring 3 des Sicherheitspunktes, mindestens eine Öffnung auf, welche geeignet ist um die rohrförmige Hülle 5x welche in ihrem Inneren den Sensor 5y samt Signalaufbereiter und Netzbatterie enthält, einzuführen.

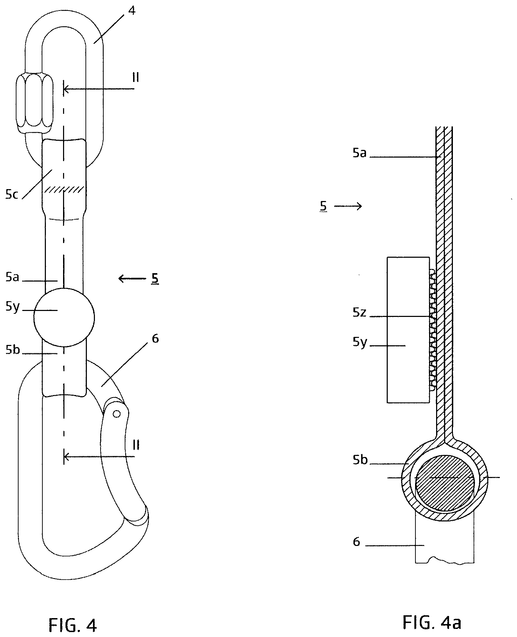

Die Erfindung schließt nicht aus, dass der Sensor 5y, zusammen mit dem Signalaufbereiter und der Batterie, in einer Hülle enthalten sind welche andere Formen, z.B. eine flache Form, aufweist um außen, am mittleren Teil 5a des Verbindungselements 5 oder, z.B. nahe am Teil welcher den Karabiner 4 oder 6 umschlingt, befestigt zu werden. Insbesondere für die äußere Anbringung können eigene Taschen oder Ausnehmungen vorgesehen sein welche z.B. über Klettverschluss zugänglich sind, ohne auszuschließen dass die vorzugsweise flache Schutzhülle 5x am Verbindungselement 5 oder an der "Kette" im Zielbereich, z.B. mittels Klettverschluss 5z (Fig. 4, 4a) befestigt ist.

Erfindungsgemäß wird seitens des Sportlers A, während des Kletterns an der Wand 7, das Seil 8 an verschiedenen Expressschlingen 5 welche an den Sicherheitspunkten mit Ring 3 einer Kletterroute eingehängt sind, eingehängt wodurch die einzelnen Sensoren 5y aktiviert werden. Diese Aktivierung erfolgt durch das Verändern der Neigung, bzw. Berührung, der einzelnen Expressschlingen 5 beim Einhängen des Seiles 8 welches durch die Sicherungsperson B am Boden der Kletterwand 7 kontrolliert wird. Das Aktivieren der einzelnen Sensoren 5y erfolgt somit nicht durch den Absturz des Sportlers A sondern durch das Einhängen des Seiles 8 an den einzelnen Expressschlingen 5, bzw. an den Sicherheitspunkten mit Ring 3 und Expressschlinge 5. Die Signale welche progressiv während des Vorankletterns des Sportlers A von den Sensoren 5y der entsprechenden benutzten Expressschlingen 5 ausgesandt werden, werden von einer Basisstation S empfangen und erkannt und an einen Smartphone oder einen Computer gesandt in welchem sie verarbeitet, angezeigt/dargestellt und mit Werten, welche während vorhergehender Durchführungen der identischen und anderer Klettrroute gespeichert worden waren, verglichen werden um die Benutzerfrequenz der einzelnen Routen/Sicherheitspunkte anzuzeigen, so dass die Optimierung der Benutzung der einzelnen Routen, die Einschätzung ihres Schwierigkeitsgrades und die Anzeige der Gesamtzeiten und/oder Teilzeiten des Durchkletterns der Routen mit Anzeige eventueller Rekordzeiten möglich wird.

## Patentansprüche

1. Expressschlinge fürs Sportklettern welche aus zwei, durch ein Verbindungselement (5) zusammengehaltene, Karabiner (4, 6) besteht, wobei das Verbindungselement aus einem mittleren Bereich besteht welcher an beiden Endbereichen mit jeweils einer Schlinge (5b, 5c) für die besagten Karabiner (4, 6) endet, **dadurch gekennzeichnet dass** dieses Verbindungselement (5) im mittleren Bereich, zwischen den Schlingen (5b, 5c), bzw. nahe einer der Schlingen, mit mindestens einem Sensor (5y) versehen ist, dass der mindestens eine Sensor (5y) infolge einer minimalen Bewegung, bzw. Berührung, der Expressschlinge, bewirkt durch deren Benutzung seitens eines Sportlers (A), ein elektronisches Signal aussendet welches von einer, mit einem Smartphone und/oder einem Computer (C) kommunizierenden, Basisstation (S) empfangen wird, so dass das Signal bearbeitet, gespeichert und mit bereits vorher gespeicherten Signalen verglichen werden kann um die, sich daraus ergebenden, entsprechenden Werte am Display anzuzeigen, bzw. graphisch darzustellen.

2. Expressschlinge gemäß Anspruch 1, **dadurch gekennzeichnet, dass** der mindestens eine Sensor (5y) ein Beschleunigungssensor, bzw. ein Trägheits-Beschleunigungssensor, ist.

3. Expressschlinge gemäß Anspruch 1, **dadurch gekennzeichnet, dass** der mindestens eine Sensor (5y) ein Infrarot-Sensor, eine Kreisel-Sensor, ein Magnetometer-Sensor oder ein NFC (near field comunication)-Sensor ist.

4. Expressschlinge gemäß Anspruch 1, **dadurch gekennzeichnet, dass** das vom mindestens einem Sensor (5y) erzeugte Signal durch einen Signalaufbereiter verarbeitet wird und dass das an die Basisstation (S) übermittelte Signal als spezifisches Signal für jede einzelne Expressschlinge, erkennbar ist.

5. Expressschlinge gemäß Anspruch 1, **dadurch gekennzeichnet, dass** der Sensor (5y), bzw. mehr Sensoren, zusammen mit dem Signalaufbereiter und der Netzbatterie im Inneren einer rohrförmigen oder flachen Schutzhülle (5x) mit Öffnungsklappe für den bequemen Batterieaustausch enthalten ist.

6. Expressschlinge gemäß Anspruch 1, **dadurch gekennzeichnet, dass** die Schutzhülle (5x) in den Mittelteil (5a) des Verbindungselementes (5) eingesetzt ist.

7. Expressschlinge gemäß Anspruch 1, **dadurch gekennzeichnet, dass** die Schutzhülle (5x) außen am Verbindungselement (5) oder an der "Kette" im Zielbereich, in eine eigene Tasche eingesetzt ist oder durch Klettverschluss (5z) oder andere bekannte Befestigungselemente gesichert.

8. Expressschlinge gemäß Anspruch 1, **dadurch gekennzeichnet, dass** der Sensor (5y) von der Art Beschleunigungssensor mit einem oder mehreren Sensoren, wie Kreisel-Sensoren und/oder Magnetometer-Sensoren, Infrarot-Sensoren, NFC (near field control)-Sensoren kombiniert ist.

## Claims

1. A quickdraw for sport climbing, which consists of two carabiners (4, 6) held together by a connecting element (5), wherein the connecting element consists of a central region which at both end regions ends in a respective loop (5b, 5c) for said carabiners (4, 6), **characterized in that** this connecting element (5) is provided with at least one sensor (5y) in the central region, between the loops (5b, 5c) or close to one of the loops, **in that** the at least one sensor (5y), as a result of minimal movement, or touching, of the quickdraw caused by use thereof by a sportsperson (A), emits an electronic signal which is received by a base station (S) communicating with a smartphone and/or a computer (C), so that the signal can be processed, stored and compared with signals already stored previously in order to display or graphically represent the corresponding values resulting therefrom on the display.

2. The quickdraw according to claim 1, **characterized in that** the at least one sensor (5y) is an acceleration sensor or an inertial acceleration sensor.

3. The quickdraw according to claim 1, **characterized in that** the at least one sensor (5y) is an infrared sensor, a gyroscope sensor, a magnetometer sensor or an NFC (Near Field Communication) sensor.

4. The quickdraw according to claim 1, **characterized in that** the signal generated by the at least one sensor (5y) is processed by a signal processor, and **in that** the signal transmitted to the base station (S) can be identified as a specific signal for each individual quickdraw.

5. The quickdraw according to claim 1, **characterized in that** the sensor (5y), or more sensors, together with the signal processor and the battery power pack, is contained in the interior of a tubular or flat protective case (5x) having an opening flap for easy battery replacement.

6. The quickdraw according to claim 1, **characterized in that** the protective case (5x) is inserted into the central part (5a) of the connecting element (5).

7. The quickdraw according to claim 1, **characterized in that** the protective case (5x) is inserted into a dedicated pocket externally on the connecting element (5), or on the "chain" in the target area, or is secured by a hook-and-loop fastener (5z) or other known fastening elements.

8. The quickdraw according to claim 1, **characterized in that** the sensor (5y) of the acceleration sensor type is combined with one or more sensors, such as gyroscope sensors and/or magnetometer sensors, infrared sensors, NFC (Near Field Control) sensors.

## Revendications

1. Dégaine express pour l'escalade sportive, constituée de deux mousquetons (4, 6) maintenus ensemble par un élément de liaison (5), l'élément de liaison étant constitué d'une zone centrale qui se termine aux deux zones d'extrémité par une boucle (5b, 5c) pour lesdits mousquetons (4, 6), **caractérisée en ce que** cet élément de liaison (5) est pourvu d'au moins un capteur (5y) dans la zone centrale, entre les boucles (5b, 5c), ou à proximité de l'une des boucles, de telle sorte que le au moins un capteur (5y), par suite d'un mouvement ou affleurement minimal, effectué par son utilisation par un sportif (A), émette un signal électronique qui est reçu par une station de base (S) communiquant avec un smartphone et/ou un ordinateur (C), de sorte que le signal puisse être traité, stocké et comparé à des signaux précédemment stockés afin d'afficher ou de représenter graphiquement les valeurs correspondantes résultantes sur écran.

2. Dégaine express selon la revendication 1, **caractérisée en ce que** le au moins un capteur (5y) est un capteur d'accélération ou un capteur d'accélération inertielle.

3. Dégaine express selon la revendication 1, **caractérisée en ce que** le au moins un capteur (5y) est un capteur infrarouge, un capteur gyroscopique, un capteur magnétométrique ou un capteur NFC (near field communication).

4. Dégaine express selon la revendication 1, **caractérisée en ce que** le signal généré par le au moins un capteur (5y) est traité par un conditionneur de signal et que le signal transmis à la station de base (S) est reconnaissable comme un signal spécifique pour chaque dégaine express individuelle.

5. Dégaine express selon la revendication 1, **caractérisée en ce que** le capteur (5y), ou plusieurs capteurs, ainsi que le conditionneur de signal et la batterie d'alimentation sont contenus dans une gaine de protection tubulaire ou plate (5x) avec un volet d'ouverture pour un remplacement pratique de la batterie.

6. Dégaine express selon la revendication 1, **caractérisée en ce que** la gaine de protection (5x) est insérée dans la partie centrale (5a) de l'élément de liaison (5).

7. Dégaine express selon la revendication 1, **caractérisée en ce que** la gaine de protection (5x) est insérée à l'extérieur de l'élément de liaison (5) ou sur la "chaîne" dans la zone cible, dans une poche propre ou fixée par du Velcro (52) ou d'autres éléments de fixation connus.

8. Dégaine express selon la revendication 1, **caractérisée en ce que** le capteur (5y) de type accéléromètre est combiné avec un ou plusieurs capteurs, tels que des capteurs gyroscopiques et/ou des capteurs magnétométriques, des capteurs infrarouges, des capteurs NFC (near field control).
